# EUROPÄISCHE PATENTANMELDUNG

(11) **EP 0 908 479 A1**
(43) Veröffentlichungstag der Anmeldung: **14.04.1999**
(21) Anmeldenummer: 98118227.2
(22) Anmeldetag: 25.09.1998
(51) Int. Cl.: C08G 18/32, C08G 18/28

(54) **Polyurethan-Zweikomponentensysteme, die Reaktivverdünner enthalten**

(30) Priorität: 10.10.1997 DE 19744748
(71) Anmelder: BASF AKTIENGESELLSCHAFT, 67056 Ludwigshafen (DE)
(72) Erfinder: Bruchmann, Bernd Dr., 67251 Freinsheim (DE); Lutter, Heinz-Dieter Dr., 69151 Neckargemünd (DE); Renz, Hans Dr., 67149 Meckenheim (DE); Scherzer, Dietrich Dr., 67433 Neustadt (DE); Mohrhardt, Günter, 67346 Speyer (DE)

(57) **Zusammenfassung**

Polyurethan-Zweikomponentensysteme, bestehend aus einer mindestens zwei funktionellen Polyisocyanatkomponente und einer Polyolkomponente, dadurch gekennzeichnet, daß die Polyolkomponente mindestens ein Hydroxylgruppen enthaltendes cyclisches Acetal und/oder Ketal enthält.

## Beschreibung

Die Erfindung betrifft Polyurethan-Zweikomponentensysteme, die Reaktivverdünner enthalten.

Polyurethan-Zweikomponentensysteme, die aus einer Polyisocyanat- und einer Polyolkomponente bestehen, sind bekannt. Bei der Umsetzung zum Polyurethan ist es von großer Bedeutung, daß die Polyolkomponente, zumeist als A-Komponente bezeichnet, und die Isocyanatkomponente, zumeist als B-Komponente bezeichnet, innig miteinander vermischt werden. Nur so gelingt es, fehlerfreie Polyurethane herzustellen.

Die üblicherweise als A-Komponenten verwendeten Polyetherole, Polyesterole, Polyacrylate etc. sind jedoch aufgrund ihres höheren Molekulargewichtes meist deutlich viskoser als die zugehörigen Isocyanatkomponenten. Das führt oft dazu, daß die Vermischung der Reaktionspartner ohne aufwendige Mischtechnik unvollständig verläuft und daß das als Endprodukt erhaltene Polyurethan durch Mischfehler hervorgerufene Fehlstellen enthalten kann.

Die Vermischung eines Polyurethansystems gelingt in der Regel dann optimal, wenn beide Reaktionspartner ähnliche, und vorzugsweise möglichst niedrige Viskositäten aufweisen. Die Isocyanatkomponenten haben bei 23°C zumeist Viskositäten im Bereich von 10 bis 5000 mPa·s, die von üblichen Mischvorrichtungen problemlos bewältigt werden können. Die Viskositäten der Polyolkomponenten beginnen meist bei 1000 mPa·s und werden nach oben nur durch die Handhabbarkeit bei der Verarbeitungstemperatur begrenzt. Das bedeutet, daß Polyole mit sehr hohen Viskositäten bzw. sehr hohen Molekulargewichten auch dann nicht eingesetzt werden können, wenn das gewünschte Eigenschaftsprofil des Polyurethans derartige Polyole erfordern würde.

Zur Erniedrigung der Viskosität der Polyolkomponente sind eine Reihe von Möglichkeiten bekannt.

So ist es möglich, die Viskosität durch Erhöhung der Verarbeitungstemperatur zu senken. Häufig ist jedoch eine solche Temperaturerhöhung apparativ nicht möglich, oder sie führt zu einer Schädigung der Polyolkomponente. Weiterhin ist es möglich, als Polyolkomponente Polyole mit niedrigen mittleren Molmassen einzusetzen. Diese Möglichkeit ist jedoch nicht bei allen Einsatzfällen durchführbar, da hierbei die Eigenschaften der Endprodukte beeinflußt werden. Bei Einsatz niedermolekularer Polyole erfolgt der Molgewichtsaufbau des Polyurethans langsamer, was insbesondere bei Lackanwendungen zu einer Verlängerung der Zeit führt, die für die physikalische Antrocknung eines Lackes, gekennzeichnet durch die sogenannte "Klebfreiheit", benötigt wird. Eine weitere Möglichkeit der Erniedrigung der Viskosität ist der Einsatz von Lösungsmitteln. Diese sind allerdings aufgrund der potentiellen Umweltbelastung nur beschränkt einsetzbar.

Eine elegante Methode zur Viskositätssenkung hochmolekularer Produkte ist der Zusatz von Reaktivverdünnern. Diese senken die Viskosität wie ein Lösungsmittel, werden jedoch, da sie an der Reaktion teilnehmen, in das Polyurethan eingebaut. In der Regel werden niedermolekulare Verbindungen eingesetzt, die mit Isocyanaten reaktive Gruppen enthalten.

Allgemein bekannt und vielfach beschrieben ist der Einsatz von niedermolekularen und niederviskosen Di- oder Triolen, wie Ethylenglykol, Propylenglykol, Dipropylenglykol, Butandiol, Glycerin und ähnlichen Produkten. Diese Alkohole haben jedoch den Nachteil, daß sie im Polyurethan Hartphasen bilden, was die Eigenschaften von Schäumen oder Lacken negativ beeinflussen kann. Weiterhin wird bei der Reaktion mit Isocyanaten aufgrund des hohen Anteils an Hydroxylgruppen im Molekül sehr viel Reaktionswärme frei, so daß sich die Polyurethansysteme bei der Reaktion überhitzen können, was zu Sicherheits- und Verarbeitungsproblemen führen kann.

Bekannt ist auch der Einsatz von Oxazolidinen als Reaktivverdünner in Polyurethansystemen. Oxazolidine öffnen ihren Ring unter Feuchtigkeitseinfluß und wirken dann als Kettenverlängerer oder Vernetzer. Daher werden sie auch als Trocknungsmittel in Polyolkomponenten eingesetzt. Derartige Systeme werden beispielsweise in US-A-3,743,626 und US-A-5,264,148 beschrieben. Nachteilig an diesen Systemen ist, daß Oxazolidine potentielle Wasserfänger sind und damit die Lagerstabilität der Systeme unzureichend ist. Außerdem entstehen bei der Ringöffnung Amine, die mit den Isocyanaten Harnstoffe bilden bzw. katalytisch in die Polyurethanreaktion eingreifen. Die Auswirkungen dieser Effekte auf das fertige Polyurethan sind schwer abzuschätzen und daher unerwünscht.

Die Aufgabe der Erfindung bestand darin, Polyurethan-Zweikomponentensysteme zu entwickeln, die Reaktivverdünner enthalten, welche einfach herzustellen sind, problemlos in das Polyurethan eingebaut werden und keine Nebenreaktion mit den Polyurethan-Aufbaukomponenten eingehen. Die Aufgabe konnte überraschenderweise gelöst werden durch die Verwendung cyclischer Acetale bzw. Ketale als Reaktivverdünner in Polyurethan-Zweikomponentensystemen.

Gegenstand der Erfindung sind demzufolge Polyurethan-Zweikomponentensysteme aus einer Komponente, die Verbindungen mit mindestens zwei Isocyanatgruppen enthält, auch als Isocyanatkomponente bezeichnet, und einer Komponente, die Verbindungen mit Isocyanat reaktiven Wasserstoffatomen enthält, auch als Polyolkomponente bezeichnet, dadurch gekennzeichnet, daß sie cyclische Acetale und/oder Ketale als Reaktivverdünner enthalten. Gegenstand der Erfindung sind weiterhin Polyolkomponenten für Polyurethan-Zweikomponentensysteme, dadurch gekennzeichnet, daß sie Hydroxylgruppen enthaltene cyclische Acetale und/oder Ketale als Reaktivverdünner enthalten. Gegenstand der Erfindung ist weiterhin ein Verfahren zur Herstellung von Polyurethanen durch Umsetzung von Polyisocyanaten mit Verbindungen mit mindestens 2 reaktiven Wasserstoffatomen, dadurch gekennzeichnet, daß die Verbindungen mit mindestens zwei reaktiven Wasserstoffatomen cyclische Acetale bzw. Ketale enthalten. Gegenstand der Erfindung ist weiterhin die Verwendung von cyclischen Acetalen bzw. Ketalen als Reaktivverdünner in Polyurethan-Zweikomponentensystemen.

Die erfindungsgemäß verwendeten cyclischen Acetale und Ketale können vorzugsweise durch Umsetzung mehrfunktioneller Alkohole mit Aldehyden oder Ketonen hergestellt werden.

Es ist hierbei vorteilhaft, als Ausgangsalkohole für die erfindungsgemäß verwendeten cyclischen Acetale und Ketale solche zu verwenden, die üblicherweise in Polyurethansystemen als Aufbaukomponenten, zumeist als Kettenverlängerer oder Vernetzer eingesetzt werden. Vorzugsweise verwendet werden solche Alkohole, die mindestens 3 Hydroxylgruppen im Molekül aufweisen, insbesondere Glycerin und Trimethylolpropan (TMP). Bei den mindestens dreifunktionellen Alkoholen bilden zwei benachbarte Hydroxylgruppen eine Ringstruktur mit dem Aldehyd- bzw. Ketonmolekül aus, und es verbleiben noch freie Hydroxylgruppen im Molekül. So ist bei der Polyurethanbildung eine stufenweise Reaktion der Reaktivverdünner möglich, indem zuerst die freien Hydroxylgruppen und, nach Abspaltung der Aldehyde bzw. Ketone, die vorher verkappten Hydroxylgruppen mit den Isocyanatgruppen reagieren können.

Die Abspaltung der Blockierungsmittel erfolgt vorzugsweise durch Verbindungen, die ohnehin im Polyurethansystem anwesend sind, wie Wasser, aber auch Säurespuren aus der Isocyanatkomponente, oder Spuren von Acrylsäure aus der für die Lackanwendungen eingesetzten Acrylatpolyole. Die abgespaltenen Blockierungsmittel diffundieren aufgrund ihrer Flüchtigkeit von selbst aus dem Polyurethan. Aufgrund ihrer zumeist geringen Menge kommt es hierbei zu keinen Beeinträchtigungen der Umwelt.

Als Aldehyde und Ketone werden vorzugsweise solche mit 1 bis 12 Kohlenstoffatomen, insbesondere 3 bis 6 Kohlenstoffatomen, in der Hauptkette eingesetzt.

Besonders geeignet sind Aceton, Methylethylketon (MEK), Methylisobutylketon (MIBK), Cyclopentanon, Cyclohexanon, Formaldehyd, Acetaldehyd, Propionaldehyd, Butyraldehyd, Isobutyaldehyd, Benzaldehyd.

Die erfindungsgemäß verwendeten cyclischen Acetale und Ketale können sehr einfach durch Umsetzung der entsprechenden Alkohole mit den Aldehyden bzw. Ketonen hergestellt werden. Hierbei kann es vorteilhaft sein, in Lösung zu arbeiten. Als Lösungsmittel kommen solche in Frage, die mit den Ausgangsverbindungen nicht reaktiv sind, beispielsweise Kohlenwasserstoffe oder Ether. Zur Erzielung einer guten Ausbeute sollte das bei der Reaktion entstehende Wasser aus der Reaktionsmischung entfernt werden. Nach der Umsetzung werden die nicht umgesetzten Ausgangsstoffe und das ggf. verwendete Lösungsmittel abgetrennt, üblicherweise durch Destillation. Die Herstellung der cyclischen Acetale oder Ketale wird z.B. in EP 456 073 beschrieben.

Für bestimmte Einsatzgebiete kann es vorteilhaft sein, die freie Hydroxylgruppe zu modifizieren, beispielsweise durch Umsetzung mit Alkylenoxiden. Diese Umsetzung wird vorzugsweise nach dem basisch katalysierten Reaktionsmechanismus, wie er zur Herstellung von Polyetheralkoholen gebräuchlich ist, durchgeführt. Als Alkylenoxide werden hierbei insbesondere Ethylenoxid, Propylenoxid und/oder Butylenoxid und als Katalysator vorzugsweise basische Verbindungen, wie Amine, Alkali- und Erdalkalihydroxide und/oder -carbonate, insbesondere Kaliumhydroxid eingesetzt.

Die cyclischen Acetale und Ketale können als Reaktivverdünner in allen Polyurethan-Zweikomponentensystemen eingesetzt werden. Der Einsatz erfolgt in einer Menge von 10 bis 100% der Polyolkomponente, wobei die höheren Anteile vorzugsweise bei den Lackanwendungen eingesetzt werden.

Beispiele hierfür sind Polyurethan-Zweikomponentenlacksysteme, wo es durch den Einsatz der cyclischen Acetale und/oder Ketale zu einer deutlichen Verringerung der Lösemittelanteile kommt.

Vorteilhaft ist die Verwendung der cyclischen Acetale und Ketale auch bei der Herstellung von faserverstärkten Polyurethan-Formteilen, insbesondere solchen auf Basis von pflanzlichen Naturfasern, wo aufgrund der niedrigen Viskosität der Polyolkomponente eine bessere Tränkung der Fasern erfolgt. Außerdem lassen sich diese Systeme viel besser auftragen, beispielsweise durch Einwalzen oder Versprühen.

Auch in Polyurethan-Schaumsystemen lassen sich die cyclischen Acetale und Ketale vorteilhaft einsetzen. Die erfindungsgemäßen Systeme zeichnen sich durch ein hervorragendes Fließverhalten aus, so daß auch komplizierte Formen problemlos gefüllt werden können. Überraschenderweise haben Weichschaumstoffe, die unter Verwendung der erfindungsgemäßen Reaktivverdünner hergestellt wurden, gegenüber herkömmlichen Schaumstoffen eine verbesserte Dehnung, ohne daß es zu einem Abfall der übrigen mechanischen Kennwerte kommt. Außerdem bleiben die mechanischen Eigenschaften der Schäume über einen weiten Bereich des Anteils der erfindungsgemäßen Reaktivverdünner auf hohem Niveau, wodurch der Einfluß von Dosierungenauigkeiten bei der Rezeptierung zurückgedrängt wird.

Die Erfindung soll an nachstehenden Beispielen näher erläutert werden:

### Beispiel 1

### Herstellung von Aceton-verkapptem Trimethylolpropan (Isopropyliden-TMP)

250 g Trimethylolpropan wurden zusammen mit 750 ml Petrolether (Siedebereich 30-75°C), 750 ml Aceton und 0,15 g p-Toluolsulfonsäure-Monohydrat 24 h am Rückfluß erhitzt. Danach wurde über einen Wasserabscheider das entstandene Reaktionswasser ausgekreist. Die Lösung wurde abgekühlt, 0,5 g Natriummethanolat zugegeben und 1h bei Raumtemperatur gerührt. Die Lösung wurde filtriert, das Lösungsmittel am Rotationsverdampfer entfernt und der Rückstand im Vakuum destilliert.
Ausbeute 78 % der Theorie, Siedepunkt 71-72°C (0,5 mbar)

### Beispiel 2

### Herstellung von Aceton-verkapptem Glycerin (Isopropyliden-Glycerin)

552 g Glycerin, 1392 g Aceton, 1400 g Petrolether (Siedebereich 30 - 75°C) und 0,47 g p-Toluolsulfonsäure-Monohydrat wurden zusammengegeben und bis zum Siedepunkt der Lösungsmittel erhitzt. Mittels eines Wasserabscheiders wurde das Reaktionswasser entfernt. Nach 42 h wurde die Reaktion durch Zugabe von 0,94 g Natriummethanolat beendet. Nach Abkühlen auf Raumtemperatur wurde die Reaktionsmischung filtriert, die Lösemittel im Vakuum am Rotationsverdampfer entfernt und der Rückstand destillativ aufgearbeitet.
Ausbeute 92 % der Theorie, Siedepunkt 189-191°C.

### Herstellung von faserverstärkten Formschäumen

### Beispiel 3 (erfindungsgemäß)

In ein auf 40°C beheiztes Prüfplattenwerkzeug der Größe 500 x 200 x 2 mm wurde eine Matte aus Flachs/Sisal 1:1 mit einem Flächengewicht von 1000 g/m² eingelegt und mit einer Mischung aus 70 g eines mit Sucrose gestarteten Polyoxypropylen-Polyols mit einer Hydroxylzahl von 403 mg KOH/g mit einer Viskosität bei 23°C = 5050 mPas und 10 g Isopropylidenglycerin (η 23°C = 10 mPas) getränkt. Die Viskosität der Polyolmischung betrug 2100 mPas bei 23°C und das Tränken der Fasermatte war problemlos möglich. Anschließend wurde die Matte mit 80 g Polymer-MDI (Lupranat® M 20 S) imprägniert, die Form auf 120°C aufgeheizt und das Formteil nach 10 min entformt.

Das Flächengewicht betrug 1510 g/m², der Biege-E-Modul wurde mit 3830 N/mm² bestimmt.

### Beispiel 4 (Vergleich)

In ein auf 40°C beheiztes Prüfplattenwerkzeug der Größe 500 x 200 x 2 mm wurde eine Matte aus Flachs/Sisal 1:1 mit einem Flächengewicht von 1000 g/m² eingelegt und mit einer Mischung aus 70 g des in Beispiel 3 genannten Sucrose-Polyols (η 23°C = 5050 mPas) und 7 g Glycerin (η 23°C = 800 mPas) getränkt. Der Anteil von 7 g Glycerin entspricht dabei molar der Menge von 10 g Isopropylidenglycerin aus Beispiel 3. Die Viskosität der Polyolmischung betrug 4400 mPas bei 23°C und das Tränken der Fasermatte war schwierig. Anschließend wurde die Matte mit 80 g Polymer-MDI (Lupranat® M 20 S) imprägniert, die Form auf 120°C aufgeheizt und das Formteil nach 10 min entformt.

Das Flächengewicht betrug 1530 g/m², der Biege-E-Modul wurde mit 3410 N/mm² bestimmt.

### Herstellung von hochelastischen Blockweichschäumen

### Beispiele 5 bis 9

Die in der Tabelle 1 angegebenen Edukte der Polyolkomponente wurden intensiv miteinander vermischt. Danach wurden die in der Tabelle 1 angegebenen Isocyanatmengen zugemischt. Das aufschäumende Reaktionsgemisch wurde in eine nach oben offene Form mit den Maßen 40 cm x 40 cm eingetragen und zum Aushärten des Polyurethan-Weichschaums über Nacht gelagert. Aus diesem Schaumstoffblock wurden die entsprechenden Formkörper nach den in Tabelle 1 genannten DIN- oder ASTM-Prüfmethoden entnommen und vermessen. Die gefundenen Werte sind in Tabelle 1 aufgeführt.

**Tabelle 1**

| Komponente | Einheit | Bsp.5(V) | Bsp. 6 | Bsp. 7 | Bsp. 8 | Bsp. 9 |
|---|---|---|---|---|---|---|
| Lupranol® 2040 | Gew.-Teile | 100 | 100 | 100 | 100 | 100 |
| IP-Glycerin | Gew.-Teile | -- | 2,00 | 4,00 | 6,00 | 8,00 |
| Lupragen® N 206 | Gew.-Teile | 0,22 | 0,22 | 0,22 | 0,22 | 0,22 |
| DBTL | Gew.-Teile | 0,06 | 0,06 | 0,06 | 0,06 | 0,06 |
| Tegostab® B 8701 | Gew.-Teile | 0,10 | 0,10 | 0,10 | 0,10 | 0,10 |
| Wasser | Gew.-Teile | 2,18 | 2,18 | 2,18 | 2,18 | 2,18 |
| Visk. A-Komponente bei 23°C | [mPas] | 1380 | 1300 | 1180 | 1120 | 1060 |
| Mischungsverhältnis, 100 Tle Polyol:Tle Isoc. | | 44,1 | 46,3 | 48,6 | 50,9 | 53,2 |
| Startzeit | [sec] | 15 | 12 | 14 | 15 | 17 |
| Abbindezeit | [sec] | 80 | 80 | 80 | 85 | 92 |
| Steigzeit | [sec] | 160 | 140 | 176 | 210 | 210 |
| Dichte DIN 53 420 | [g/l] | 51,7 | 51,0 | 49,6 | 51,0 | 47,5 |
| Dehnung DIN 53 571 | [%] | 194 | 242 | 330 | 337 | 245 |
| Klebfreie Zeit | [min] | 5 | 7 | 10 | 16 | 20 |
| - Isocyanat-(B)-Komponente: Es wurde in allen Versuchen Lupranat VP 9237/1® eingesetzt, der NCO-Gehalt dieses Prepolymeren lag bei 28,4 %. - Lupranol® 2040: Polyoxypropylenpolyoxyethylentriol; OH-Zahl: 28 mg KOH/g - Lupragen® N 206: Bis(N,N-dimethylaminoethyl)ether, 70 % in Dipropylenglycol - Tegostab® B 8701: Silicon-Schaumstabilisator | | | | | | |

### Beispiele 10 bis 14: Verwendung von 1-Butanol als Reaktivverdünner (Vergleich)

Es wurde verfahren wie in den Beispielen 5 bis 9 angegeben und beschrieben, doch wurde anstelle des Isopropylidenglycerins 1-Butanol der Polyolkomponente zugesetzt und diese verschäumt.

**Tabelle 2**

| Komponente | Einheit | Bsp.10 (V) | Bsp.11 (V) | Bsp.12 (V) | Bsp.13 (V) | Bsp.14 (V) |
|---|---|---|---|---|---|---|
| Lupranol® 2040 | Tle | 100 | 100 | 100 | 100 | 100 |
| 1-Butanol | Tle | -- | 2,00 | 4,00 | 6,00 | 8,00 |
| Lupragen® N 206 | Tle | 0,22 | 0,22 | 0,22 | 0,22 | 0,22 |
| DBTL | Tle | 0,06 | 0,06 | 0,06 | 0,06 | 0,06 |
| Tegostab® B 8701 | Tle | 0,10 | 0,10 | 0,10 | 0,10 | 0,10 |
| Wasser | Tle | 2,18 | 2,18 | 2,18 | 2,18 | 2,18 |
| Visk. A-Komponente bei 23°C | [mPas] | 1380 | 1150 | 970 | 815 | 720 |
| Mischungsverhältnis, 100 Tle Polyol:Tle Isoc. | | 44,1 | 48,8 | 53,4 | 58,1 | 62,8 |
| Startzeit | [sec] | 13 | 14 | 14 | 14 | 15 |
| Abbindezeit | [sec] | 80 | 87 | 90 | 87 | 85 |
| Steigzeit | [sec] | 155 | 130 | 180 | 180 | 200 |
| Dichte DIN 53 420 | [g/l] | 50,2 | 49,1 | 48,4 | 46,8 | Kollaps |
| Dehnung DIN 53 571 | [%] | 208 | 312 | 324 | 157 | -- |
| Klebfreie Zeit | [min] | 5 | 15 | 25 | 30 | -- |

Im Vergleich zu Beispiel 5-9 fällt auf, daß die Schäume bereits bei 2 Teilen Butanol wesentlich länger zum vollständigen Aushärten (Klebfreiheit) benötigen. Die Dichte der Schäume fiel beständig, bei Zugabe von 6 Teilen Butanol sind Elastizität, Zugfestigkeit und Dehnung nicht mehr akzeptabel. Bei Zugabe von 8 Teilen kollabiert der Schaum.

### Beispiel 15: Einsatz von Glycerin als Reaktivverdünner (Vergleich)

Eine Schaumherstellung war nicht durchführbar, da bereits bei Zugabe von 2 Teilen Glycerin zur A-Komponente der PU-Schaum einen derartigen Schrumpf aufwies, daß keine Prüfkörper entnommen werden konnten.

Erläuterung der eingesetzten Komponenten:
Einsatz in PU-Lacksystemen

### Beispiele 16 bis 24

Die erfindungsgemäßen Reaktivverdünner wurden exemplarisch mit einem hydroxifunktionellen Acrylatharz (Lumitol® H 136, BASF) sowie verschiedenen Polyisocyanathärtern (Basonat® HI 100, Basonat® P LR 8901, BASF) entsprechend den Verhältnissen aus Tabelle 3 gemischt und zur Beschleunigung der Aushärtung mit Dibutylzinndilaurat (DBTL) katalysiert. Die Verarbeitungszeiten lassen sich entsprechend der Katalysatordosierung einstellen. Die Einstellung auf eine Applikationsviskosität von 20 s (DIN 53 211 Becher 4 mm Auslaufdüse) erfolgt mit Butylacetat. Die Festgehalte wurden nach DIN V 53 216 1. Teil bestimmt.

Mit einem Filmziehrahmen wurden auf Glasplatten Beschichtungen mit einer Naßfilmdicke von 200 µm aufgetragen. Die so erhaltenen Klarlacke wurden 7 Tage unter Normklima gehärtet, oder 20 min. bei 80°C eingebrannt. Als Vergleich wurde ein Klarlack ohne Zusatz von Reaktivverdünner geprüft.

**Tabelle 3**

| Formulierungsbeispiele für Klarlacke | | | | | | | | | |
|---|---|---|---|---|---|---|---|---|---|
| | Vgl. | | | | | | | | |
| Beispiel | 16(V) | 17 | 18 | 19 | 20 | 21 | 22 | 23 | 24 |
| Lumitol H 136 | 100 | 80 | 60 | 40 | 20 | 0 | 80 | 40 | 0 |
| Isopropylidenglycerin | 0 | 20 | 40 | 60 | 80 | 100 | | | |
| IsopropylidenTMP | | | | | | | 20 | 60 | 100 |
| Basonat P LR 8900 | 32,2 | 112,5 | 192,8 | 273,2 | 353,5 | 433,9 | | | |
| Basonat HI 100 | | | | | | | 91,6 | 210,4 | 329,2 |
| DBTL [%] (f.a.f) | 0,1 | 0,1 | 0,1 | 0,1 | 0,1 | 0,1 | 0,1 | 0,1 | 0,1 |
| Lackfestgehalt [%] | 47,8 | 64,2 | 73,2 | 78,9 | 82,8 | 85,9 | 58,8 | 71,4 | 77,4 |

Die angegebenen Werte sind Gewichtsteile
- Acrylatharz:: Lumitol® H 136, Festgehalt = 70 %, OHZ = 135 mg KOH/g
- Polyisocyanate:: Basonat® P LR 8900, niederviskoses HDI-Polyisocyanat, Viskosität ca. 1200 mPas, Festgehalt = 100 %, NCO-Gehalt = 22 %
Basonat® HI 100, HDI-Polyisocyanat, Viskosität ca. 3200 mPas, Festgehalt = 100 %, NCO-Gehalt = 22 %

Die Klarlacke wiesen eine hohe Flexibilität und Haftung sowie eine sehr gute Kratzbeständigkeit auf.

In den Beispielen wurden die Reaktivverdünner als Lösemittelersatz eingesetzt. Die Lacksysteme wurden auf gleiche Auslauf-Viskosität eingestellt, der Anteil des Reaktivverdünners spiegelte sich dabei in den steigenden Werten für den Lackfestgehalt wieder. Nach der Tabelle wurde gegenüber dem Standardsystem (16V) die Lösemittelmenge von 52,2 % auf 14,1 %, bzw. auf 22,6 % reduziert. Dabei waren die Eigenschaften der Lacke gleichbleibend gut.

## Patentansprüche

1. Polyurethan-Zweikomponentensysteme, bestehend aus einer mindestens zweifunktionellen Polyisocyanatkomponente und einer Polyolkomponente, dadurch gekennzeichnet, daß die Polyolkomponente mindestens ein Hydroxylgruppen enthaltendes cyclisches Acetal und/oder Ketal enthält.

2. Verfahren zur Herstellung von Polyurethanen durch Umsetzung von mindestens zwei funktionellen Polyisocyanaten mit Verbindungen mit aktiven Wasserstoffatomen, dadurch gekennzeichnet, daß die Verbindungen mit aktiven Wasserstoffatomen als Reaktivverdünner cyclische Acetale und/oder Ketale enthalten.

3. Verfahren nach Anspruch 2, dadurch gekennzeichnet, daß die Verbindungen mit aktiven Wasserstoffatomen 10 bis 100 Gew.-% cyclische Acetale enthalten.

4. Verfahren nach Anspruch 2, dadurch gekennzeichnet, daß als cyclische Acetale und/oder Ketale Umsetzungsprodukte aus mehrfunktionellen Alkoholen und Aldehyden und/oder Ketonen eingesetzt werden.

5. Verfahren nach Anspruch 2, dadurch gekennzeichnet, daß als cyclische Acetale und/oder Ketale Umsetzungsprodukte aus Alkoholen mit mindestens 3 Hydroxylgruppen mit Aldehyden und/oder Ketonen eingesetzt werden.

6. Verfahren nach Anspruch 2, dadurch gekennzeichnet, daß als cyclische Acetale und/oder Ketale Umsetzungsprodukte aus mehrfunktionellen Alkoholen mit Aldehyden und/oder Ketonen mit 1 bis 12 Kohlenstoffatomen in der Hauptkette eingesetzt werden.

7. Verfahren nach Anspruch 2, dadurch gekennzeichnet, daß die Aldehyde ausgewählt sind aus der Gruppe, enthaltend Formaldehyd, Acetaldehyd, Propionaldehyd, Isobutyraldehyd, und die Ketone ausgewählt sind aus der Gruppe, enthaltend Aceton, Methylethylketon, Methylisobutylketon und Cyclohexanon.

8. Verwendung von cyclischen Acetalen und/oder Ketalen als Reaktivverdünner zur Viskositätssenkung der Polyolkomponente in Polyurethan-Systemen.
